# EUROPÄISCHE PATENTSCHRIFT

(11) **EP 3 140 615 B1**
(45) Veröffentlichungstag und Bekanntmachung des Hinweises auf die Patenterteilung: **10.08.2022**
(21) Anmeldenummer: 15723187.9
(22) Anmeldetag: 07.05.2015
(51) Int. Cl.: G01S 19/40, G01C 21/04, G01C 21/28, G01S 19/49

(54) **ZUORDNUNG EINER REFERENZPOSITION ZU EINEM CHARAKTERISTISCHEN VERLAUF EINES BEWEGUNGSAUFNAHMESENSOR-SIGNALS**
ALLOCATION OF A REFERENCE POSITION TO A CHARACTERISTIC PROGRESSION OF A MOTION SENSOR SIGNAL
AFFECTATION D'UNE POSITION DE RÉFÉRENCE À UNE COURSE CARACTÉRISTIQUE D'UN SIGNAL DE CAPTEUR DE MOUVEMENT

(30) Priorität: 07.05.2014 DE 102014208541
(43) Veröffentlichungstag der Anmeldung: 15.03.2017
(73) Patentinhaber: Continental Automotive Technologies GmbH, 30165 Hannover (DE)
(72) Erfinder: KUNKEL, Annemarie, 53797 Lohmar (DE); STÄHLIN, Ulrich, 65760 Eschborn (DE); ZYDEK, Bastian, 65812 Bad Soden (DE); GREWE, Ralph, 65933 Frankfurt am Main (DE); ARBITMANN, Maxim, 60323 Frankfurt am Main (DE); GROTENDORST, Thomas, 65760 Eschborn (DE); KOMAR, Matthias, 64646 Heppemheim (DE); SWOBODA, Adam, 64521 Gross-Gerau (DE)
(74) Vertreter: Continental Corporation
(86) Internationale Anmeldenummer: PCT/EP2015/060109
(87) Internationale Veröffentlichungsnummer: WO 2015/169922

(56) Entgegenhaltungen:
- WO-A1-2013/084287
- DE-A1-102008 020 446
- DE-A1-102013 016 435
- JP-A- 2001 004 382
- JP-A- 2006 153 714
- JP-A- 2007 155 504
- US-A1- 2004 167 716
- US-A1- 2013 103 298

## Beschreibung

Die Erfindung betrifft ein Verfahren zum Bestimmen einer Referenzposition als Grundlage für eine Korrektur einer mittels eines GNSS genannten globalen Satellitennavigationssystems georteten Absolutposition eines Fahrzeuges, ein Verfahren zum Aufzeichnen einer Karte basierend auf der bestimmten Referenzposition, sowie eine Steuervorrichtung zur Durchführung der Verfahren.

Aus der WO 2011 / 098 333 A1 ist bekannt, in einem Fahrzeug verschiedene Sensorgrößen heranzuziehen, um bereits vorhandene Sensorgrößen zu verbessern oder neue Sensorgrößen zu generieren und somit die erfassbare Information zu steigern.

Die DE 10 2008 020446 A1 betrifft ein Konzept zum Korrigieren von, in einer digitalen Karte gespeicherten, markanten Punkten, entlang einer Fahrtroute eines Fahrzeugs. Bei den markanten Punkten handelt es sich um signifikante Unebenheiten auf der Fahrbahn oder um optisch wahrnehmbare Besonderheiten. Wenn ein markanter Punkt auf der Fahrtroute detektiert wird, wird ein Vergleich ausgeführt mit Daten auf der digitalen Karte und/oder mit gesondert gespeicherten Daten bezüglich der markanten Punkte, um zu bestimmen, um welchen markanten Punkt es sich handelt. Nach einer Identifikation des markanten Punktes, dessen Position genau bekannt ist, wird eine Korrektur der gemessenen Fahrzeugposition vorgenommen.

Die JP 2006 153714 A betrifft ein System zum Korrigieren einer auf einem Display anzeigten Position eines Fahrzeugs. Das System umfasst eine Karte, in welcher Positionen von Wegunebenheiten und damit verbundene Fahrzeugvibrationen gespeichert sind. Beim Überfahren einer Wegunebenheit wird die damit verbundene Fahrzeugvibration gemessen, mit den in der Karte gespeicherten Fahrzeugvibrationen verglichen und dementsprechend die anzeigte Position korrigiert.

Die US 2013/103298 A1 betrifft ein Verfahren zum Bestimmen eines Standorts eines Fahrzeugs. Das Verfahren umfasst Schritte zum Erfassen mehrerer Sensordaten von einem Radarsensor, der dem Fahrzeug zugeordnet ist; Ermitteln eines ungefähren Standorts des Fahrzeugs unter Verwendung einer GPS-Einheit; Vergleichen der Sensordaten mit einer Datenbank von georeferenzierten Sensordaten; und, basierend auf dem Vergleich, bestimmen eines Orts des Fahrzeugs.

Es ist Aufgabe die Nutzung mehrerer Sensorgrößen zur Informationssteigerung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Bestimmen einer Referenzposition als Grundlage für eine Korrektur einer mittels eines GNSS genannten globalen Satellitennavigationssystems georteten Absolutposition eines Fahrzeuges die Schritte:
- Erfassen eines Ausgangssignals eines Bewegungsaufnahmesensors des Fahrzeugs,
- Erkennen, ob das Ausgangssignal einen charakteristischen Verlauf aufweist, der ein von Unebenheiten der Fahrbahn abhängiges Signalmuster darstellt,
- Erfassen der Absolutposition des Fahrzeuges mittels des GNSS, wenn das Ausgangssignal einen charakteristischen Verlauf aufweist,
- Speichern des charakteristischen Verlaufs des Ausgangssignals zusammen mit der Absolutposition als Referenzposition, und
- Korrigieren einer bereits gespeicherten Referenzposition, an der der charakteristische Verlauf bereits erfasst wurde, basierend auf der Absolutposition mittels eines Lernverfahrens oder einer Mittelwertbildung, falls die gespeicherte Referenzposition in einem Bereich um die Absolutposition liegt.

Dem angegebenen Verfahren liegt die Überlegung zugrunde, dass es beispielsweise im Rahmen eines Loosly oder Tightly Coupled GNSS (GNSS = globales Navigationssatellitensystem) möglich ist, die Ortung eines Fahrzeuges durch Fusionierung der über GNSS ermittelten Absolutposition mit Fahrdynamikdaten zu verbessern.

Hierzu wird vereinfacht ausgedrückt mit den Fahrdynamikdaten eine Referenzposition fortgeschrieben. Damit steht neben der mittels GNSS ermittelten Absolutposition die basierend auf den Fahrdynamikdaten fortgeschriebene Referenzposition zur Verfügung, die dann untereinander durch Sensorfusionierung korrigiert werden können.

Der mittels der Fahrdynamikdaten fortschreibbaren Referenzposition liegt jedoch schlussendlich nur die über GNSS ermittelte Absolutposition zugrunde, weil in dem Fahrzeug kein alternatives Sensorsystem vorhanden ist, das neben dem GNSS die absolute Lage des Fahrzeuges auf eine alternative Weise zur Verfügung stellen könnte. Damit wird der grundlegende Gedanke der Sensorfusion unterlaufen, dass zur Präzisierung der Absolutposition des Fahrzeuges unterschiedliche Informationsquellen verknüpft werden sollen. Dies hat einen deutlichen Einfluss auf die Qualität der fusionierten Sensordaten.

Hier setzt das angegebene Verfahren an, im Rahmen dessen mit den Fahrdynamiksensoren anhand eines charakteristischen Verlaufs ihres Ausgangssignals eine charakteristische Anregung einer der Fahrdynamiksensoren erkannt wird. Der zu der erkannten charakteristischen Anregung gehörende charakteristische Verlauf des Ausgangssignals kann dann zusammen mit der aktuell ermittelten Absolutposition als Referenzposition gespeichert werden. Passiert das Fahrzeug die Absolutposition, an der das Ausgangssignal der Fahrdynamiksensoren den charakteristischen Verlauf aufweist, ein weiteres Mal, steht als Referenzposition für die Fortschreibung mittels Fahrdynamikdaten eine von der mittels GNSS ermittelten Absolutposition unabhängige Information zur Verfügung, die dem Grundgedanken der Sensorfusion gerechter wird.

Die Erfassung des charakteristischen Verlaufs ist jedoch nicht auf reine Fahrdynamiksensoren beschränkt, sondern lässt sich mit jedem beliebigen Bewegungsaufnahmesensor im Fahrzeug realisieren, aus dessen Ausgangssignal sich ein funktionaler Zusammenhang zur Absolutposition des Fahrzeuges ablesen lassen könnte. Dazu sollte der ausgewählte Bewegungsaufnahmesensor in besonders zweckmäßiger Weise derart eingerichtet sein, dass sein Ausgangssignal in einer bestimmten Weise von örtlichen abhängigen Eigenschaften der Fahrbahn abhängig ist, auf der sich das Fahrzeug bewegt. Dies kann beispielsweise ihre Oberflächenstruktur oder ihr Verlauf sein. Diese örtlich abhängigen Eigenschaften der Fahrbahn können dann mit den Bewegungsaufnahmesensor als charakteristische Stelle erfasst und als Referenzposition verwendet werden, die dann jederzeit basierend auf einem charakteristischen Muster im Ausgangssignal des Bewegungsaufnahmesensors wiedererkannt werden kann. Derartige charakteristische Stellen können beispielsweise baulich bedingte Unebenheiten auf der Fahrbahn sein. Solche baulich bedingten Unebenheiten finden sich an Ausfahrten aus Höfen, Garagen, e.t.c., an Gullideckeln, an Querfugen auf Straßen mit Betondecken, an Materialänderungen der Straßenoberfläche, wie beispielsweise von Asphalt auf Kopfsteinpflaster oder an die Fahrbahn kreuzenden Schienen.

Unter Umständen können bei der Erkennung der charakteristischen Stellen im Ausgangssignal aus dem Bewegungsaufnahmesensor weitere Sensoren mit eingebunden werden, um beispielsweise die dem charakteristischen Verlauf im Ausgangssignal des Bewegungsaufnahmesensors zugrundeliegende charakteristische Anregung des Bewegungsaufnahmesensors in verschiedenen Achsen zu vermessen. So könnte beispielsweise berücksichtigt werden, ob es sich bei einer derartigen charakteristischen Anregung um eine Anregung mit einer Ausdehnung quer zur Fahrtrichtung des Fahrzeuges handelt, wie sie beispielsweise bei den oben genannten Schienen vorkommt.

Als Bewegungsaufnahmesensor kommt prinzipiell jeder beliebige Sensor im Fahrzeug in Frage, der eine Position und/oder eine Geschwindigkeit und/oder eine Beschleunigung wenigstens eines Bauteils des Fahrzeuges oder auch des gesamten Fahrzeuges misst. Dabei muss die Position, Geschwindigkeit oder Beschleunigung nicht zwingend linear, sondern kann beispielsweise auch winkelförmig erfasst werden. Besonders bevorzugt kommen als Bewegungsaufnahmesensoren Sensoren in Frage, die im Rahmen einer Fahrdynamikregelung Verwendung finden, also Raddrehzahlsensoren, Lenkwinkelsensoren, Beschleunigungssensoren und/oder Drehratensensoren. Ebenso können Reifendrucksensoren verwendet werden, die eine schnelle Änderung des Reifenluftdrucks erkennen können und damit indirekt beispielsweise auf Schienen quer zur Rollrichtung der Reifen schließen lassen.

Die zuvor genannte Referenzposition kann in einer besonderen Weiterbildung des angegebenen Verfahrens auch zusätzlich zum Abspeichern gelernt werden. Unter Lernen soll nachstehend die Computergenerierung von Wissen durch Erfahrung verstanden werden, wobei das Wissen im Rahmen des angegebenen Verfahrens die Referenzposition ist und die Erfahrung verschiedene Absolutpositionen sind, die dem charakteristischen Verlauf des Ausgangssignals aus dem Bewegungsaufnahmesensor zugeordnet werden können. Dabei umfasst das Lernen normalerweise einen Filterprozess. Dieser Filterprozess kann so ausgebildet sein, dass bei einem erneuten Erfassen einer Absolutposition mittels des GNSS die bereits abgespeicherte Referenzposition basierend auf der erneut erfassten Absolutposition korrigiert wird. Das heißt, dass die Referenzposition im Rahmen des Lernens iterativ korrigiert wird. Diese Korrektur ist umso wirkungsvoller und vor allem verlässlicher, je häufiger der charakteristische Verlauf des Ausgangssignals aus dem Bewegungsaufnahmesensor schon erkannt wurde und damit je höher die Anzahl der Lernvorgänge der Referenzposition oder Iterationen ist, denn mit der Häufigkeit der Lernvorgänge werden statistische Effekte bei der Erfassung der Absolutposition mittels GNSS ausgeglichen, was die Ungenauigkeit der Referenzposition reduziert.

In einer zusätzlichen Weiterbildung des angegebenen Verfahrens kann dann zur Referenzposition ein Zählwert zugeordnet werden, der anzeigt, wie oft der charakteristische Verlauf in dem Ausgangssignal aus dem Bewegungssensor erkannt wurde. Eventuell kann der Referenzposition zu diesem Zählwert auch eine weitere Information zugeordnet werden, die anzeigt, wie verlässlich die aktuelle Absolutposition ermittelt werden konnte. In diese Information können dann beispielsweise Umgebungsbedingungen bei der Erfassung der einzelnen Absolutpositionen, die der Referenzposition zugrunde liegen, mit eingehen. Derartige Umgebungsbedingungen sind beispielsweise die Qualität der GNSS-Signale, die Streuung der Absolutpositionen, die grundsätzliche Verfügbarkeit der GNSS-Signale, wenn der charakteristische Verlauf in dem Ausgangssignal aus dem Bewegungssensor erkannt wurde, u.s.w.

Technisch können für das Lernen verschiedene Konzepte zum Einsatz kommen. So wären beispielsweise unter anderem neuronale Netze, Support Vector Machines oder Neuro-Fuzzy Ansätze möglich.

In einer weiteren Weiterbildung umfasst das angegebene Verfahren den Schritt Erfassen einer weiteren Absolutposition des Fahrzeuges, wenn das Ausgangssignal aus einem Bewegungsaufnahmesensor des Fahrzeuges einen sich vom charakteristischen Verlauf unterscheidenden weiteren charakteristischen Verlauf aufweist. Als Unterschied zwischen dem weiteren charakteristischen Verlauf und dem zuvor genannten charakteristischen Verlauf können beliebige Merkmale im Ausgangssignal des Bewegungsaufnahmesensors gesucht werden. Beispielsweise kann das Ausgangssignal dafür hinsichtlich seiner Form untersucht werden oder einer FFT (schnelle Fourier Transformation) unterzogen werden. Wenn beide charakteristischen Verläufe die gleiche Form besitzen, kann diese auch über ihren zeitlichen Abstand zueinander unterschieden werden.

Um zwei verschiedene zeitlich beabstandete charakteristische Verläufe von einem einzigen charakteristischen Verlauf zu unterscheiden, dem eine einzige charakteristische Anregung zugrunde liegt, die das Fahrzeug in einem bestimmten Abstand zweimal passiert, wird bei der Erfassung einer charakteristischen Anregung basierend auf einem charakteristischen Verlauf im Ausgangssignal die dazugehörige, über das GNSS erfasste Absolutposition berücksichtigt. Solange diese mit einer bestimmten Toleranz gleich ist, gehört ein erfasster charakteristischer Verlauf zu einer einzigen charakteristischen Anregung. Um diese Toleranz zu berücksichtigen könnte ein Abstand zwischen dem charakteristischen Verlauf und dem weiteren charakteristische Verlauf eine vorbestimmte Bedingung erfüllen, gemäß der der Abstand zwischen zwei charakteristischen Anregungen zweckmäßigerweise groß genug ist, dass eine Unterscheidung von zwei Anregungen problemlos möglich ist. Dabei könnten unter anderem das verwendete GNSS, die Qualität des GNSS-Empfängers, die Anzahl der empfangenen Satelliten und die Anzahl der verwendeten Frequenzen berücksichtigt werden, um die vorbestimmte Bedingung, und insbesondere den Abstand zu definieren.

In einer anderen Weiterbildung umfasst das angegebene Verfahren den Schritt Löschen der Referenzposition basierend auf einer weiteren vorbestimmten Bedingung. Diese vorbestimmte Bedingung könnte als Vergessensfaktor definert werden, mittels dem alte Referenzpositionen mit der Zeit wieder aus einem als Gedächtnis wirkenden Speicher entfernt werden können. Alternativ könnten alte Referenzpositionen mittels des Vergessensfaktors auch gewichtet werden und so mit der Zeit an Bedeutung verlieren. So können auch sich ändernde Gegebenheiten berücksichtigt werden, beispielsweise wenn aufgrund von Änderungen im Straßenverlauf eine bestimmte Referenzposition mit dem Fahrzeug nicht mehr angefahren werden kann.

Eine weitere Möglichkeit wäre eine Änderung in der Oberflächenbeschaffenheit der Fahrbahn, wodurch eine bestimmte charakteristische Anregung an einer Referenzposition nicht mehr erfasst werden könnte. Wird eine derartige Referenzposition, an der eigentlich eine charakteristische Anregung aufgrund der Historie zu erwarten wäre erneut befahren, ohne dass eine charakteristische Anregung erkannt wird, so könnte hier ein Integritätsmaß für die Zuordnung zwischen der Referenzposition und dem charakteristischen Verlauf des Ausgangssignals herabgestuft werden. Unterschreitet dieses Integritätsmaß für die entsprechende Referenzposition einen Schwellwert, so könnte die Referenzposition und alle ihr zugeordneten Daten aus dem Speicher komplett gelöscht werden. Somit ist es möglich, die Referenzposition zur zuvor genannten Anregungen, die durch bauliche Maßnahmen an der Fahrbahn oder andere Effekte verschwinden, auch aus dem System zu entfernen, ohne dass die Information, dass an dieser Referenzposition eine charakteristische Anregung existiert, aus dem System manuell gelöscht werden muss.

Gemäß einem weiteren Aspekt der Erfindung umfasst ein Verfahren zum Aufzeichnen einer Karte die Schritte Bestimmen einer Referenzposition mit einem der vorgenannten Verfahren und Eintragen der bestimmten Referenzposition als Kartenposition in die Karte.

Im Rahmen dieses Verfahrens ist es nicht notwendig, eine digitale Karte mit Referenzpositionen und charakteristischen Anregungen als Grundlage, also Apriori vorhandene Daten, im Fahrzeug vorzuhalten. Die in einer digitalen Karte hinterlegbaren Informationen werden während der Nutzung des angegebenen Verfahrens erstellt und sind somit individuell für jedes einzelne Fahrzeug, in dem das angegebene Verfahren angewendet wird.

Die Erfindung macht sich die Erkenntnis zunutze, dass die Verknüpfung der Beschleunigungsdaten mit der Absolutposition besonders vorteilhaft ist und wichtige Daten für Anwendung zur Erhöhung der Fahrsicherheit und des Fahrkomforts bietet, wie hiernach noch weiter beschrieben. Einerseits ist es anhand der Beschleunigung möglich den Zustand der Fahrbahn zu ermitteln. Darüber hinaus geben die Daten über die Beschleunigung, insbesondere der Verlauf der Beschleunigungsdaten, auch einen Aufschluss über das Verhalten von Fahrern. Beide Nutzungsszenarien können in optimaler Weise genutzt werden, wenn sie in einer hohen Anzahl und regelmäßig gesammelt werden und zu einer Referenzposition referenziert werden. Auf diese Weise sind besonders verlässliche und zutreffende Durchschnittswerte zu den Fahrbahnzustand, Fahrertyp, Gefahrenstellen oder anderen Informationen ermittelbar, die ortsbezogen verwendbar sind. Besonders vorteilhaft ist es hierbei, dass diese Daten ohne zusätzlichen Aufwand des Fahrers ermittelbar sind und dieser von seiner Haupttätigkeit der Fahrzeugführung nicht wesentlich abgelenkt wird. Die verbesserte Positionserfassung mittels des Verfahrens nach dem ersten Aspekt der Lösung hilft dabei die Beschleunigungsverläufe möglichst präzise einer Position zuzuordnen. Da für das erste Verfahren die Daten des Bewegungssensors ohnehin vorliegen, muss das erstgenannte Verfahren auch nicht wesentlich verändert werden.

Vorteilhafterweise werden die Daten von einem oder mehreren Beschleunigungssensoren verwendet, die im Fahrzeug verbaut sind. Alternativ und zusätzlich dazu können mobile Endgeräte, wie z. B. Smartphones, die im Auto in einer Halterung befestigt sind dazu genutzt werden, um die Daten aufzuzeichnen.

Wird das Endgerät als Alternative genutzt, d. h. es wird nur ein mobiles Endgerät zur Datenerfassung verwendet, kann die Verknüpfung der Daten mit der Absolutposition in einer zentral verwalteten Karte oder einem Backend Server erfolgen. Die Verknüpfung der Beschleunigungsdaten mit der Absolutposition kann dabei über einen Abgleich mit der vom Endgerät erfassten Position oder über einen Zeitstempel erfolgen. Die Rückführung der Daten in das Fahrzeug kann über andere Fahrzeugschnittstellen, wie Fahrzeug-zu-X Systemen oder Navigationssystemen erfolgen.

Wird das Endgerät zusätzlich zu den Beschleunigungssensoren im Fahrzeug verwendet, so können die Daten bereits im Fahrzeug über eine direkte Verbindung zwischen Fahrzeug und Endgerät abgeglichen, fusioniert und / oder validiert werden, bevor es abgespeichert und extern übermittelt wird.

Das erfindungsgemäße Verfahren wird in vorteilhafter Weise dadurch weitergebildet, dass der Verlauf der Beschleunigung des Beschleunigungssensors mit der Referenzposition verknüpft aufgezeichnet wird. Vorteilhaft ist es den Verlauf der Beschleunigung über eine bestimmte Periode aufzuzeichnen und zu einer Referenzposition abzuspeichern. Beispielsweise könnte der Verlauf vor und nach einer Bremsschwelle erfasst, gespeichert und zur Position der Bremsschwelle referenziert werden. Aufgrund der Veränderungen der Beschleunigungen lassen sich auf diese Weise Verschiedene Informationen über Fahrvorgängen, die an der Bremsschwelle stattfinden selbst ermitteln. Darüber hinaus kann hieraus bei ausreichend vorhandenen Datenmengen eine Fahrempfehlung ermittelt werden.

Das erfindungsgemäße Verfahren wird in vorteilhafter Weise dadurch weitergebildet, dass der Verlauf des Längsbeschleunigungssensors zu Referenzpositionen aufgezeichnet wird, bspw eine vordefinierte Strecke oder Zeitdauer vor und nach der jeweiligen Referenzposition. Der Längsbeschleunigungssensor zeichnet die Daten von Brems- und Anfahrtsvorgängen auf, die Aufschluss sowohl Aufschluss über das Fahrverhalten, aber auch über Straßeneigenschaften, wie z. B. Schlaglöcher, Bremsschwellen oder dgl. geben. Zusätzlich dazu kann die Geschwindigkeit des Fahrzeugs entsprechend an Referenzpositionen oder entlang einer Strecke aufgezeichnet werden.

Das erfindungsgemäße Verfahren wird in vorteilhafter Weise weitergebildet durch die Schritte:
- Auswerten des Beschleunigungsverlaufs, und
- Erkennen von Fahrbahnunebenheiten anhand von Beschleunigungsspitzen.

Das erfindungsgemäße Verfahren wird in vorteilhafter Weise weitergebildet durch den Schritt:
- Erkennen von Fahrbahnunebenheiten anhand eines mittels einer Kamera aufgenommen Straßenbildes.

Ergänzend zu den Daten der Beschleunigungssensoren können Kamerabilder verwendet werden, um die Referenzpunkte redundant zu erkennen und / oder zu validieren. Alternativ kann die Kamera auch zur vorausschauenden Erkennung von Referenzpunkten oder markanten Punkten auf der Straße verwendet werden, um darauf hin einen Eingriff in die Fahrdynamik zu initiieren oder auch das Speichern von Beschleunigungsdaten vorzunehmen. Umgekehrt können die Kamerabilder und -daten mittels der Beschleunigungsdaten validiert werden.

Das erfindungsgemäße Verfahren wird in vorteilhafter Weise weitergebildet durch den Schritt:
- Erstellen einer lokal und / oder zentral verwalteten Karte für Fahrbahnunebenheiten.

Es kann zum einen vorgesehen sein, dass im Fahrzeug nur die Daten erfasst werden und die Auswertung der Daten über ein externes System oder einen Backend Server erfolgt. Auf diese Weise kann die Rechenkapazität im Fahrzeug gering gehalten werden. In der einfachsten Version würde die Karte die Beschleunigungsdaten enthalten, die mit den jeweiligen Referenzpositionen verknüpft wären. Die Karte könnte durch ein Geschwindigkeitsprofil ergänzt werden. Alternativ kann auch im Fahrzeug bereits eine Auswertung der erfassten Daten erfolgen und diese lokal abgespeichert werden, damit das Fahrzeug möglichst autonom agieren kann. Die eigenen Daten können ggf. auch durch externe Daten ergänzt werden. Diese Variante kann auch damit kombiniert werden, dass die erfassten und ausgewerteten Daten über ein externes System oder ein Backend Server zu einer vollständigeren Karte zusammengestellt werden.

Das erfindungsgemäße Verfahren wird in vorteilhafter Weise dadurch weitergebildet, dass die Fahrbahnunebenheiten in Abhängigkeit von Beschleunigungsspitzen Klassifiziert werden. Die Höhe von Beschleunigungsspitzen kann insbesondere dazu genutzt werden, um auffällige Bremssituationen und damit Gefahrensituationen zu erkennen.

Das erfindungsgemäße Verfahren wird in vorteilhafter Weise dadurch weitergebildet, dass der Verlauf der Beschleunigung mit weiteren Fahrsituations-, Fahrertyp- und / oder Fahrzeugparametern verknüpft werden. Auf diese Weise ist eine zuverlässigere Auswertung und Ableitung von Fahrempfehlungen möglich. Insgesamt soll auf mit dieser Ausführungsform erreicht werden, dass die einzelnen Fahrmanöver im Kontext der Umgebungsverhältnisse und des Fahrertyps betrachtet werden.

Das erfindungsgemäße Verfahren wird in vorteilhafter Weise dadurch weitergebildet, dass mittels des Verlaufs der Beschleunigung und den jeweiligen Parametern Beschleunigungsverlaufscluster oder Cluster von Geschwindigkeitprofilen gebildet werden.

Das erfindungsgemäße Verfahren wird in vorteilhafter Weise dadurch weitergebildet, dass aus dem Verlauf der Beschleunigung und / oder aus den Fahrbahnunebenheiten Sollgeschwindigkeiten oder Gefahrenstellen abgeleitet werden. Diese Informationen können in unterschiedlichster Form verwendet werden. In einer einfachen Form könnte es zur Warnung des Fahrers vor Gefahrensituationen dienen. Darüber hinaus könnte es auch dazu dienen, in die Fahrdynamik des Fahrzeugs einzugreifen.

Nach einer besonders vorteilhaften Ausführungsform ist es vorgesehen, dass die Sollgeschwindigkeit zur Bestimmung der Geschwindigkeit des Fahrzeugs verwendet wird, dessen Geschwindigkeit über ein Tempomat oder autonom geführt wird. Da es sich bei den Sollgeschwindigkeiten um eine empirische Sollgeschwindigkeit handelt, könnte hier die Akzeptanz durch Fahrer höher sein, als bei einer Geschwindigkeit, die rein nach physikalisch und gesetzlich Möglichem ermittelt wird. Besonders vorsichtige Fahrer könnten die empirische Sollgeschwindigkeit als angenehmer empfinden.

Die Sollgeschwindigkeit kann auch dazu verwendet werden, um bei ungünstiger Fahrbahnbeschaffenheit eine komfortablere Fahrweise einzustellen.

Insgesamt bilden die empirisch erfassten Beschleunigungsdaten eine sehr gute Datenbasis, um eine Vielzahl von Fahrparameter abzuleiten, die zum Einstellen verschiedener Fahrassistenz-, Warn- oder Assistenzsysteme verwendbar sind.

Ein weiterer Aspekt der Erfindung betrifft eine Steuervorrichtung gemäß Anspruch 20.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges auf einer Straße,
Fig. 2 eine Prinzipdarstellung des Fahrzeuges der Fig. 1 in einer alternativen Ansicht,
Fig. 3 eine Prinzipdarstellung eines Fusionssensors in dem Fahrzeug der Fig. 1,
Fig. 4 eine Prinzipdarstellung des Fahrzeuges aus Fig. 1 auf der Straße, und
Fig. 5 eine Prinzipdarstellung des Fahrzeuges aus Fig. 1 auf der Straße in einer alternativen Ansicht zeigen.

In den Figuren werden gleiche technische Elemente mit gleichen Bezugszeichen versehen und nur einmal beschrieben.

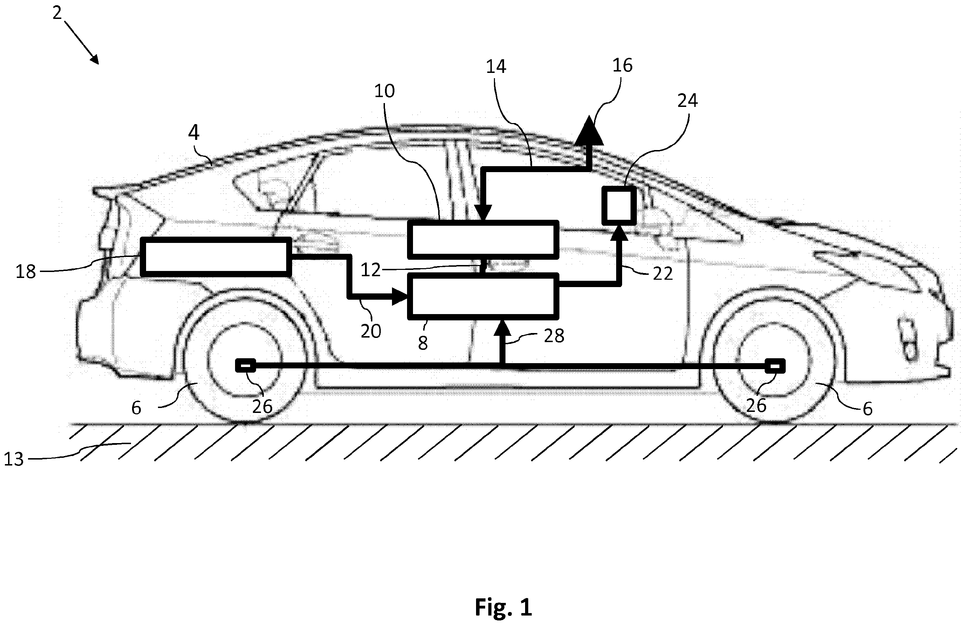

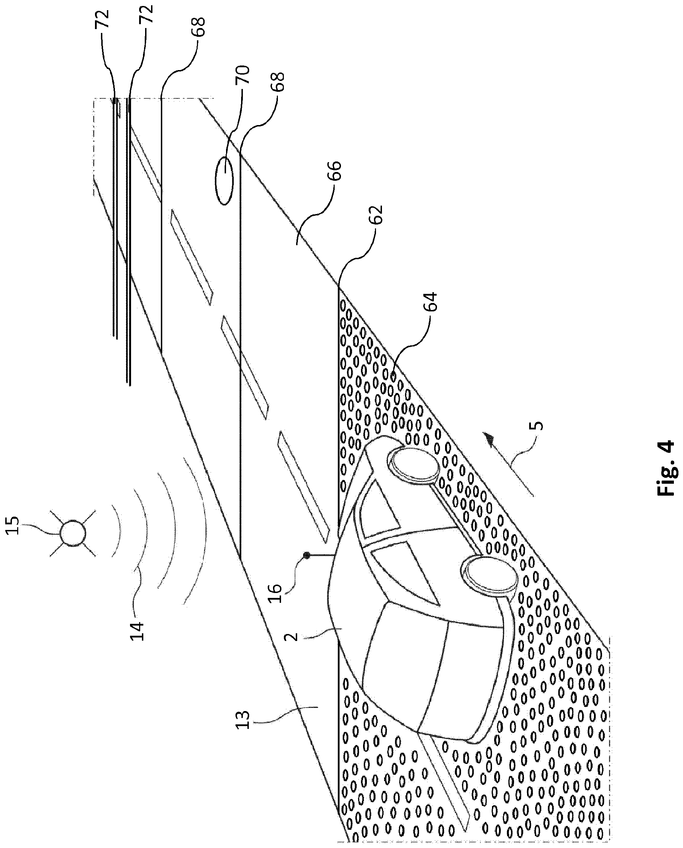

Es wird auf Fig. 1 Bezug genommen, die eine Prinzipdarstellung eines Fahrzeuges 2 mit einem Chassis 4 zeigt, das auf Rädern 6 in einer in Fig. 4 angedeuteten Fahrrichtung 5 fahrbar getragen ist. In dem Fahrzeug 2 ist ein Fusionssensor 8 angeordnet.

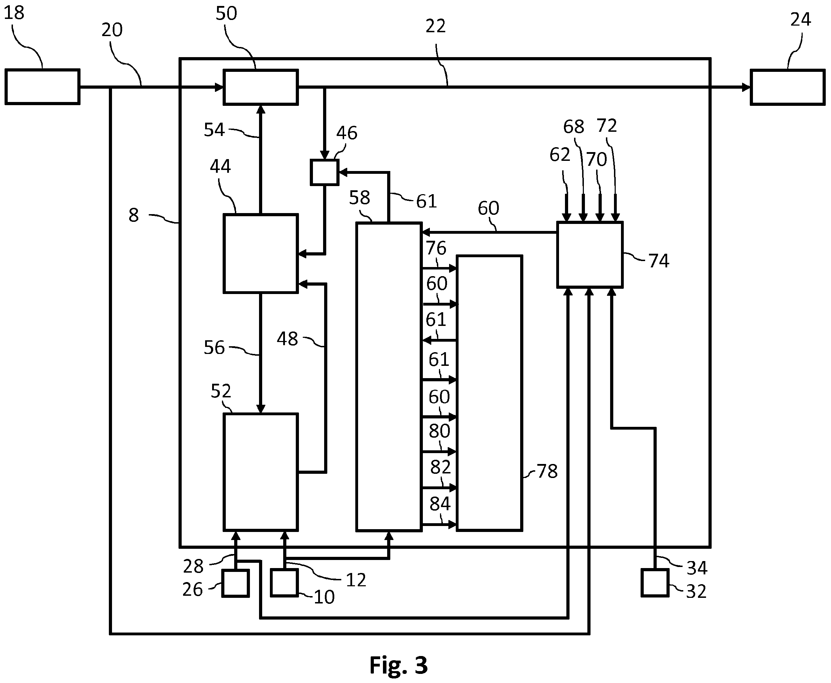

Der Fusionssensor 8 empfängt in der vorliegenden Ausführungsform über einen an sich bekannten GNSS-Empfänger 10 Lagedaten 12 des Fahrzeuges 2, die unter anderem eine in Fig. 3 angedeutete Absolutposition 76 des Fahrzeuges 2 auf einer Fahrbahn 13 beschreiben. Neben der Absolutposition 76 können die Lagedaten 12 aus dem GNSS-Empfänger 10 zusätzlich auch eine Geschwindigkeit des Fahrzeuges 2 beschreiben. Die Lagedaten 12 aus dem GNSS-Empfänger 10 werden in der vorliegenden Ausführung in einer dem Fachmann bekannten Weise aus einem von einem in Fig. 4 angedeuteten GNSS-Satelliten 15 ausgesendeten GNSS-Signal 14 in dem GNSS-Empfänger 10 abgeleitet, das über eine GNSS-Antenne 16 empfangen wird und daher nachstehend GNSS-Lagedaten 12 genannt. Für Details dazu wird auf die einschlägige Fachliteratur verwiesen.

Der Fusionssensor 8 ist in einer noch zu beschreibenden Weise dazu ausgebildet, den Informationsgehalt der aus dem GNSS-Signal 14 abgeleiteten GNSS-Lagedaten 12 zu steigern. Dies ist einerseits notwendig, da das GNSS-Signal 14 einen sehr niedrigen Signal/Rauschbandabstand aufweisen und so sehr ungenau sein kann. Andererseits ist das GNSS-Signal 14 nicht ständig verfügbar.

In der vorliegenden Ausführung weist das Fahrzeug 2 dazu einen Bewegungsaufnahmesensor in Form eines Inertialsensors 18 auf, der Fahrdynamikdaten 20 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2. Diese Fahrdynamikdaten 20 werden in der vorliegenden Ausführung herangezogen, um den Informationsgehalt der GNSS-Lagedaten 12 zu steigern und beispielsweise die Position und die Geschwindigkeit des Fahrzeuges 2 auf der Fahrbahn 13 zu präzisieren. Die präzisierten Lagedaten 22 können dann von einem Navigationsgerät 24 selbst dann verwendet werden, wenn das GNSS-Signal 14 beispielsweise unter einem Tunnel überhaupt nicht verfügbar ist.

Zur weiteren Steigerung des Informationsgehaltes der GNSS-Lagedaten 12 können in der vorliegenden Ausführung optional noch weitere Bewegungsaufnahmesensoren in Form von Raddrehzahlsensoren 26 verwendet werden, die die Raddrehzahlen 28 der einzelnen Räder 6 des Fahrzeuges 2 erfassen.

Auf die Erzeugung der präzisierten Lagedaten 22 wird an späterer Stelle in Fig. 3 näher eingegangen.

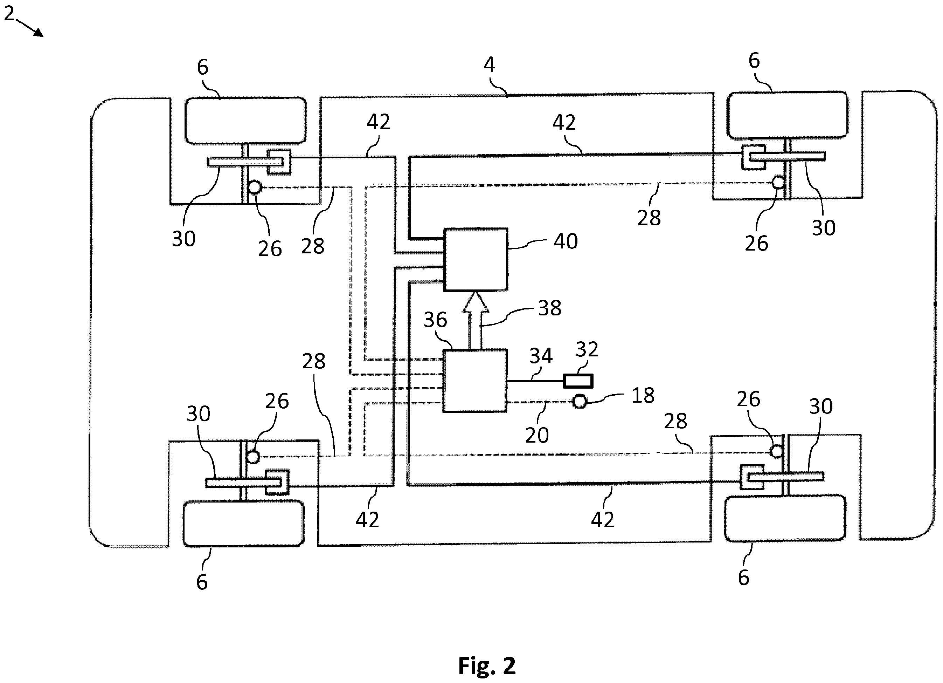

Es wird auf Fig. 2 Bezug genommen, die eine Prinzipdarstellung des Fahrzeuges 2 mit einer in dem Fahrzeug verbauten Fahrdynamikregelung zeigt. Details einer Fahrdynamikregelung können beispielsweise der DE 10 2011 080 789 A1 entnommen werden.

Jedes Rad 6 des Fahrzeuges 2 kann über eine ortsfest am Chassis 4 befestigte Bremse 30 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung zur Fahrbahn 13 verlieren und sich das Fahrzeug 2 sogar von einer beispielsweise über ein nicht weiter gezeigtes Lenkrad vorgegebenen Trajektorie durch Untersteuern oder Übersteuern wegbewegt. Diese Trajektorie kann beispielsweise aus einem über einen weiteren Bewegungsaufnahmesensor in Form eines Lenkwinkelsensors 32 erfassten Lenkwinkel 34 vorgegeben werden. Dies wird durch an sich bekannte Regelkreise wie ABS (Antiblockiersystem) und ESP (elektronisches Stabilitätsprogramm) vermieden. In derartigen Regelkreisen werden durch Sensoren

Messdaten erfasst. Regler vergleichen die Messdaten dann mit Solldaten und führen die Messdaten mittels Stellgliedern an die Solldaten heran.

In der vorliegenden Ausführung weist das Fahrzeug 2 als Sensoren die Drehzahlsensoren 26 an den Rädern 6 auf, die als Messdaten jeweils ihre Drehzahl 28 der Räder 6 erfassen. Ferner weist das Fahrzeug 2 als Sensor den Inertialsensor 18 auf, der als Messdaten die Fahrdynamikdaten 20 des Fahrzeuges 2 erfasst.

Basierend auf den erfassten Drehzahlen 12 und Fahrdynamikdaten 20 kann ein Regler 36 in einer dem Fachmann bekannten Weise bestimmen, ob das Fahrzeug 2 auf der Fahrbahn 13 rutscht oder sogar von der oben genannten vorgegebenen Trajektorie abweicht und entsprechen mit einem an sich bekannten Reglerausgangssignal 38 darauf reagieren. Das Reglerausgangssignal 38 kann dann von einer Stelleinrichtung 40 verwendet werden, um mittels Stellsignalen 42 Stellglieder, wie die Bremsen 30 anzusteuern, die auf das Rutschen und die Abweichung von der vorgegebenen Trajektorie in an sich bekannter Weise reagieren.

Der Regler 36 kann beispielsweise in eine an sich bekannte Motorsteuerung des Fahrzeuges 2 integriert sein. Auch können der Regler 36 und die Stelleinrichtung 40 als eine gemeinsame Regeleinrichtung ausgebildet sein.

Es wird auf Fig. 3 Bezug genommen, die eine Prinzipdarstellung des Fusionssensors 8 aus Fig. 1 zeigt.

In den Fusionssensor 8 gehen die in Fig. 1 bereits erwähnten Messdaten ein. Der Fusionssensor 8 soll die präzisierten Lagedaten 22 ausgeben. Grundgedanke dazu ist es, die Information aus den GNSS-Lagedaten 12 den Fahrdynamikdaten 20 aus dem Inertialsensor 18 in ein Filter 44 gegenüberzustellen und so einen Signal/Rauschbandabstand in den GNSS-Lagedaten 12 des GNSS-Empfängers 10 oder den Fahrdynamikdaten 18 aus dem Inertialsensor 20 zu erhöhen. Dazu kann das Filter zwar beliebig ausgebildet sein, ein Kalman-Filter löst diese Aufgabe am wirkungsvollsten mit einem vergleichsweise geringen Rechenressourcenanspruch. Daher soll das Filter 44 nachstehend vorzugsweise ein Kalman-Filter 44 sein.

In das Kalman-Filter 44 gehen über ein noch zu beschreibendes Korrekturglied 46 die präzisierten Lagedaten 22 des Fahrzeuges 2 und Vergleichslagedaten 48 des Fahrzeuges 2 ein. Die präzisierten Lagedaten 22 werden in der vorliegenden Ausführung in einem beispielsweise aus der DE 10 2006 029 148 A1 bekannten Strapdown-Algorithmus 50 aus den Fahrdynamikdaten 20 generiert. Sie enthalten präzisierten Positionsinformationen über das Fahrzeug 2, aber auch andere Lagedaten über das Fahrzeug 2, wie beispielsweise seine Geschwindigkeit, seine Beschleunigung und sein Heading. Demgegenüber werden die Vergleichslagedaten 48 aus einem Modell 52 des Fahrzeuges 2 gewonnen, das zunächst einmal aus dem GNSS-Empfänger 10 mit den GNSS-Lagedaten 12 gespeist wird. Aus diesen GNSS-Lagedaten 12 werden dann in dem Modell 52 die Vergleichslagedaten 48 bestimmt, die die gleichen Informationen enthalten, wie die präzisierten Lagedaten 22. Die präzisierten Lagedaten 22 und die Vergleichslagedaten 48 unterscheiden sich lediglich in ihren Werten.

Das Kalman-Filter 30 berechnet basierend auf den präzisierten Lagedaten 22 und den Vergleichslagedaten 48 einen Fehlerhaushalt 54 für die präzisierten Lagedaten 22 und einen Fehlerhaushalt 56 für die Vergleichslagedaten 48. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 14 und damit bei den GNSS-Lagedaten 12 kann sich ein entsprechender Fehlerhaushalt aus Fehlern der Satellitenbahn, der Satellitenuhr, der restlichen Refraktionseffekte und aus Fehlern im GNSS-Empfänger 10 zusammensetzen.

Der Fehlerhaushalt 54 der präzisierten Lagedaten 22 und der Fehlerhaushalt 56 der Vergleichslagedaten 48 werden dann entsprechend dem Strapdown-Algorithmus 50 und dem Modell 52 zur Korrektur der präzisierten Lagedaten 22 beziehungsweise der Vergleichslagedaten 48 zugeführt. Das heißt, dass die präzisierten Lagedaten 22 und die Vergleichslagedaten 48 iterativ um ihre Fehler bereinigt werden.

Das Fusionsfilter 4 kann in der oben beschriebenen Weise die Fahrdynamikdaten 20 des Fahrzeuges 2, die durch den Inertialsensor 18 erfasst werden, basierend auf den GNSS-Lagedaten 12 und den Raddrehzahlen 28 recht gut korrigieren.

Anders verhält es sich jedoch mit einer absoluten Position des Fahrzeuges 2, für die eigentlich nur der GNSS-Empfänger 10 verfügbar wäre, der die Absolutposition 76 des Fahrzeuges 2 in den GNSS-Lagedaten 12 ausgibt. Da im Fahrzeug 2 für die Absolutposition 76 des Fahrzeuges 2 keine Vergleichswerte verfügbar sind, können Fehler bei der Erfassung der Absolutposition 76, wie beispielsweise atmosphärische Störungen nicht korrigiert werden und verringern daher ein Integritätsmaß der präzisierten Lagedaten 22.

Zur Steigerung des Integritätsmaßes der präzisierten Lagedaten 22 schlägt die vorliegende Ausführung vor, sich als Vergleichswert für die Absolutposition 76 des Fahrzeuges 2 eine Referenzposition 61 experimentell zu verschaffen. Dazu ist in der vorliegenden Ausführung eine Positionsbestimmungseinrichtung 58 vorgesehen, die basierend auf einem charakteristischen Verlauf 60 aus einem Ausgangssignal 20, 28, 34 der oben genannten Bewegungsaufnahmesensoren 18, 26, 32.

Die Ausgangssignale 20, 28, 34 weisen den zuvor genannten charakteristischen Verlauf 60 auf, wenn das Fahrzeug 2 auf der Fahrbahn 13 in Fig. 4 gezeigte charakteristische Anregungen passiert. Dabei handelt es sich im Einzelnen um einen Oberflächenübergang 62, bei dem ein Belag der Fahrbahn 13 von Kopfsteinpflaster 64 auf Beton 66 wechselt, um Querfugen 68 im Beton 66, um Gullideckel 70 und die Fahrbahn 13 quer kreuzende Schienen 72. Als charakteristische Anregung 62, 68, 70, 72 kommen auf der Fahrbahn 13 alle Eigenschaftsveränderungen in Betracht, die die oben genannten Bewegungsaufnahmesensoren 18, 26, 32 in einer reproduzierbaren Weise über einen ausreichend kurzen Zeitraum anregen und eine eindeutige Zuordnung der Absolutposition 76 des Fahrzeuges 2 erlauben. Das Kopfsteinpflaster 64 selbst währe daher eher ungeeignet, weil es die Bewegungsaufnahmesensoren 18, 26, 32 über einen zu langen Zeitraum anregt, so dass dieser Anregung keine eindeutige Absolutposition zugeordnet werden kann.

*"Ausreichend kurz"* sollte zweckmäßigerweise geschwindigkeitsabhängig definiert sein. *"In reproduzierbarer Weise"* sollte derart verstanden werden, dass wenn das Fahrzeug 2 eine charakteristische Anregung ein weiteres Mal passiert, die oben genannten Bewegungsaufnahmesensoren 18, 26, 32 ein Ausgangssignal 20, 28, 34 mit dem gleichen charakteristischen Verlauf 60 ausgeben.

Die charakteristischen Anregungen 62, 68, 70, 72, die den Ausgangssignalen 12, 28, 34 der Bewegungsaufnahmesensoren 18, 26, 32 zu einem charakteristischen Verlauf 60 führen würden, können einem Auswahlfilter 74 vorgegeben werden, der dann aus den Ausgangssignalen 12, 28, 34 den charakteristischen Verlauf 60 herausfiltert und an die Positionsbestimmungseinrichtung 58 ausgibt.

Zusammen mit dem charakteristischen Verlauf 60 empfängt die Positionsbestimmungseinrichtung 58 die Lagedaten 12 mit der Absolutposition 76, an dem sich das Fahrzeug zu dem Zeitpunkt befindet, an dem der charakteristische Verlauf 60 auftritt. Die Positionsbestimmungseinrichtung 58 fragt basierend auf der dem charakteristischen Verlauf 60 und der Absolutposition 76 einen Speicher 78 ab, ob in einem Bereich um die Absolutposition 76, an dem der charakteristische Verlauf 60 erfasst wurde, bereits eine Referenzposition 61 gespeichert ist, an der dieser charakteristische Verlauf 60 bereits erfasst wurde. Der Bereich um die Absolutposition 76, in dem eine Referenzposition 61 liegen darf, sollte dabei einerseits örtlich nicht zu eng gewählt werden, damit eine Korrektur der Absolutposition 76 überhaupt möglich ist. Andererseits sollte der Bereich um die Absolutposition 76, in dem eine Referenzposition 61 liegen darf, aber auch nicht zu breit gewählt werden, damit nicht fälschlicherweise zwei verschiedene charakteristische Anregungen 62, 68, 70, 72 einer einzigen Referenzposition 61 zugeordnet werden.

Antwortet der Speicher 78 mit einer bereits gespeicherten Referenzposition 61 im Bereich um die Absolutposition 76, dann korrigiert die Positionsbestimmungseinrichtung 58 die gespeicherte Referenzposition 61 basierend auf der neu erfassten Absolutposition 76. Dies kann beispielsweise durch Mittelwertbildung, durch gewichtete Mittelwertbildung, durch analog zum Filter 44 aufgebautes Filter oder jedes beliebige andere Filter sein, mit dem die erfassten Absolutpositionen 76 im Bereich einer charakteristischen Anregung 62, 68, 70, 72 über die Zeit zu einer möglichst genauen Referenzposition 61 korrigiert werden können. Die korrigierte Referenzposition 61 wird dann optional zusammen mit der zugehörigen charakteristischen Anregung 60 im Speicher 78 wieder hinterlegt. Gleichzeitig wird die korrigierte Referenzposition 61 an das Korrekturglied 46 ausgegeben, dass dann die präzisierten Lagedaten 22 analog zum Filter 44 basierend auf der korrigierten Referenzposition 61 präzisieren kann.

Ist zu einer charakteristischen Anregung 60 noch keine Referenzposition 61 gespeichert, dann kann die Positionsbestimmungseinrichtung 58 die aktuelle Absolutposition 76 als korrigierte Referenzposition 61 zusammen mit der charakteristischen Anregung 60 zusammen im Speicher 78 hinterlegen. Auch könnte die Positionsbestimmungseinrichtung 58 diese derart bestimmte korrigierte Referenzposition 61 an das Korrekturglied 46 ausgeben, obgleich hier kein Präzisionsgewinn in den präzisierten Lagedaten 22 vorhanden sein dürfte, weil die korrigierte Referenzposition 61 gleich der aktuell in den Lagedaten 12 enthaltenen Absolutposition 76 ist.

Alternativ könnte die Korrektur der präzisierten Lagedaten 22 basierend auf der korrigierten Referenzposition 61 auch unterbunden werden, wenn die Referenzposition 61 noch als zu ungenau eingestuft wird. Hierzu könnte beispielsweise zusammen mit der Referenzposition 61 im Speicher 78 ein Zählwert 80 abgespeichert werden, der anzeigt, wie oft die Referenzposition 61 bereits basierend auf einer Absolutposition 76 korrigiert wurde. Ist dieser Zählwert zu klein, dann kann die Korrektur der präzisierten Lagedaten 22 basierend auf der korrigierten Referenzposition 61 unterbunden werden.

Schließlich sollte auch der Fall berücksichtigt werden, dass bestimmte charakteristische Anregungen 62, 68, 70, 72 mit der Zeit, beispielsweise durch bauliche Maßnahmen oder dergleichen nicht mehr vorhanden sein könnten. Wird auf der Fahrbahn 13 beispielsweise die Oberfläche erneuert und das Kopfsteinpflaster 64 als auch das Beton 66 durch einen Asphaltoberfläche ersetzt, dann könnte die charakteristische Anregung in Form des Oberflächenübergangs 62 verschwinden. Hierzu könnte im Speicher 78 zusätzlich ein Integritätsmaß 82 hinterlegt werden. Dieses Integritätsmaß 82 zeigt an, wie zuverlässig die Referenzposition 61 im Speicher 78 ist. Jedes Mal, wenn die Positionsbestimmungseinrichtung 58 eine Referenzposition 61 ausliest, zu der ein charakteristischer Verlauf 60 abgespeichert ist, und zu dieser Referenzposition 61 jedoch keinen charakteristischen Verlauf 60 erfasst, dann kann die Positionsbestimmungseinrichtung 58 das zu dieser Referenzposition 61 zugehörige Integritätsmaß 82 senken. Fällt das Integritätsmaß 82 unter eine bestimmte Schwelle, dann kann die Positionsbestimmungseinrichtung 58 die entsprechende Referenzposition 61 mit allen zugehörigen Daten aus dem Speicher 78 mit einem Löschbefehl 84 löschen.

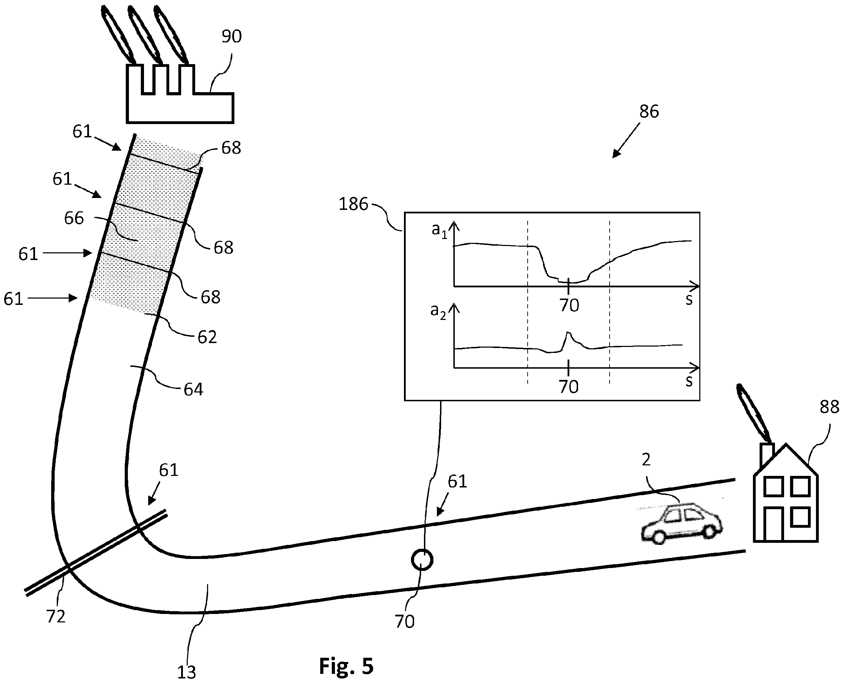

Es wird auf Fig. 5 Bezug genommen, die eine Prinzipdarstellung einer Karte 86 zeigt, die sich mit den einzelnen Referenzpositionen 61 erstellen lässt.

Das Fahrzeug 2 soll auf der Straße 13 zwischen einem Heim 88 des Fahrers des Fahrzeuges 2 und seinem Arbeitsplatz 90 täglich pendeln.

Auf der Straße 13 in Fig. 5 sind die einzelnen charakteristischen Anregungen 62, 68, 70, 72 an den Referenzpositionen 61 noch einmal angedeutet. Durch das Aufzeichnen der einzelnen Referenzpositionen 61, an denen die einzelnen charakteristischen Anregungen 62, 68, 70, 72 erfasst und gelernt wurden, kann die Karte 86 erstellt werden, die unabhängig von einer Karte in dem Navigationssystem 24 ist.

Die Karte 86 kann wie bereits beschrieben zum einen dazu genutzt werden, um die Absolutposition zu korrigieren. Gleichzeitig kann die Karte 86 auch dazu verwendet bzw. deart ergänzt werden, um u. a. Fahr-, Geschwindigkeits-, Gefahren-, Fahrertypen- und Sollgeschwindigkeitsprofile zu hinterlegen. Es muss nur die Anpassung gemacht werden, dass der charakteristische Verlauf der Fahrzeugbeschleunigung, insbesondere Längsbeschleunigung, ggf. auch die Querbeschleunigung, aufgezeichnet und der Referenzposition zugeordnet wird.

In Figur 5 ist das beispielhaft anhand der Referenzposition 70 verdeutlicht. Das Diagramm 186 zeigt den Verlauf der Längs- und Querbeschleunigung a₁, a₂ des Fahrzeugs 2 im Bereich der Referenzposition 70. Der Fahrer, der diese Stelle regelmäßig überfährt bremst kurz vor der Straßenunebenheit ab und umfährt diesen, so dass in der Längsbeschleunigung a₁ ein Bremsvorgang und in der Querbeschleunigung a₂ ein Ausweichvorgang verzeichnet wird. Der Verlauf der Beschleunigung wird für den Referenzpunkt abgespeichert und kann dazu ausgewertet und genutzt werden, um bspw. Sollgeschwindigkeiten für diese Referenzstelle zu ermitteln. Alternativ kann der Verlauf der Beschleunigung und Geschwindigkeit über die gesamte Strecke einer Fahrt ermittelt werden, um ein Geschwindigkeitsprofil zu erstellen. Dies ermöglicht weitere Nutzungsszenarien, wie hiernach noch beschrieben.

Ein weiteres Beispiel sei im Folgenden beschrieben. Aus den Daten des Längsbeschleunigungssensors in Kombination mit dem Geschwindigkeitsverlauf, lassen sich Rückschlüsse auf Straßenunebenheiten ziehen, z.B. auf Bremsschwellen zur Geschwindigkeitsreduzierung am Beginn von Tempo-30 Zonen.

Die Geschwindigkeit wird typischerweise von einer Anfangsgeschwindigkeit mehr oder weniger konstant bis auf eine relativ niedrige Geschwindigkeit von vielleicht 5-10km/h sinken, um kurz darauf wieder auf eine höhere Geschwindigkeit von z.B. 30km/h anzusteigen. Im Geschwindigkeitstal sind eine Reihe von charakteristischen Spitzen bzw. Peaks im Signal der Längsbeschleunigung erfassbar. Der erste Peak gibt dabei in Verbindung mit der Fahrzeugposition und -geometrie recht genau den Anfang der Straßenunebenheit wieder, der letzte die Breite der Unebenheit. Die Höhe der Peaks in Kombination mit der Geschwindigkeit kann genutzt werden, um die Höhe der Unebenheit zu klassifizieren.

Sind die Peaks auch im Signal der Querbeschleunigung sichtbar, deutet das auf eine Unebenheit hin, die sich nicht über die ganze Fahrbahnbreite hinzieht.

Diese Analyse kann entweder schon im Fahrzeug erfolgen und ressourcenschonend als Information "Fahrbahnunebenheit / Referenzposition" zum Backend gesendet werden, oder das Backend sammelt die Rohdaten und führt die Berechnung selber durch. In entsprechend ausgestatteten Fahrzeugen kann auch eine Kamera zusätzlich entsprechende Informationen bereitstellen. In jedem Fall kann das Backend die Daten über die Fahrbahnunebenheiten statistisch auswerten, in die Karte eintragen und an die Fahrzeuge verteilen.

Vorteilhaft ist es hierbei, dass die Bewegungsdaten oder Beschleunigungsdaten durch weitere Daten oder Parameter zur Fahrkonditionen und / oder Fahrertyp ergänzt werden, wie z.B.:
- Straßenzustand (Eis, Trocken, Nass, Schnee ..)
- Witterung
- Beleuchtungsbedingungen
- Fahrzeugtyp.

Zusätzlich ist es besonders vorteilhaft, wenn in die beschriebene Statistik nur Fahrzeuge einfließen, die frei fahren, also keine anderen Verkehrsteilnehmer vor sich haben.

Auf diese Weise ist eine Clusterbildung nach Parametern möglich, die wichtig zur Einstellung von Warn-, Assistenz- und Automatisierungssystemen ist. Bei starkem Regen fährt man z. B. langsamer als bei trockenem Wetter.

Hieraus eröffnet sich unter anderem die Möglichkeit personalisierte Geschwindigkeitsprofile zu erstellen. Es wird vorgeschlagen die Geschwindigkeiten eines Fahrers verknüpft mit Fahrpositionen zu erfassen und diese vorzugsweise unter Berücksichtigung der vorgenannten Parameter, mit anderen Geschwindigkeitsprofilen zu vergleichen. Vorteilhafterweise kann die Erfassung von Daten auch über mobile Endgeräte erfolgen, wie z. B. Smartphones. Fahrerprofile können entweder durch Erfassen der Beschleunigungs- und / oder Geschwindigkeitsverläufe über eine gesamte Strecke und anschließend Vergleich mit anderen Verläufen erstellt werden. Alternativ können auch nur die entsprechenden Verläufe an charakteristischen Stellen, d. h. enge Kurve, Bremsschwelle, erfasst und in Bezug zu Verläufen anderer Fahrer gestellt werden.

Die Auswertung dieser Daten über einen längeren Zeitraum ermöglicht eine Einordnung des Fahrers in bestimmte Klassen des Fahrverhaltens. Diese Klassen werden aus den statistisch ausgewerteten Geschwindigkeitsprofilen abgeleitet. Die Klassifizierung erfolgt beispielsweise nach folgender Unterteilung:
- ökonomisches Fahrverhalten (langsamer als der Durchschnitt)
- durchschnittliches Fahrverhalten
- sportliches Fahrverhalten (schneller als der Durchschnitt) Diese Klassifizierung kann nachfolgend für eine personalisierte Routenplanung oder Einstellung von Assistenzsystemen berücksichtigt werden.

Auf diese Weise kann folgendes Problem sehr effektiv gelöst werden. Die sich ergebende Sollgeschwindigkeit entspricht nicht immer der Geschwindigkeit, welche im Falle eines manuellen Fahrens gewählt werden würde. Als Beispiel sei hierbei unter anderem eine Fahrt durch eine enge Kurve genannt, deren Verlauf schwer durch den Fahrer einsehbar ist und je nach Fahrertyp unterschiedlich durchfahren wird. Hier wählt ein ökonomisch oder vorsichtig fahrender Fahrer typischer Weise eine Geschwindigkeit die unter der Sollgeschwindigkeit liegt, die auf Basis der oben genannten Parameter berechnet wurde. Dies kann dazu führen, dass der Fahrer bei aktiviertem Assistenz- oder Automatisierungssystem sich unwohl oder beängstigt fühlt, da das System für ihn zu schnell durch die Kurve fährt. Durch empirisch ermittelte Sollgeschwindigkeiten können die Systeme zur Fahrerassistenz oder zum autonomen Fahren lebensnaher eingestellt werden.

Alternativ kann die typische Geschwindigkeit auch als Eingangsparameter zur Berechnung der Soll-Geschwindigkeit herangezogen werden. Alternativ kann die Sollgeschwindigkeitsberechnung auf Basis der zuvor beschriebenen Parameter herangezogen werden um zwischen den typischen Geschwindigkeiten (Stützstellen) zu interpolieren um so einen sprungfreien Verlauf der Sollgeschwindigkeit auf Niveau der typischen Geschwindigkeiten zu erreichen.

Ein weiteres Anwendungsfeld einer solchen Beschleunigungs- bzw. Geschwindigkeitskarte ist die Erkennung von Gefahrenstellen. Auf Grundlage der vorgenannten Karten könnte somit auch eine Gefahrenkarte erstellt werden.

Die hohe Datenerfassung profitiert unter anderem davon, dass ein großer Anteil der Geschwindigkeitsprofile von ortskundigen Fahrern übermittelt wird. Diese kennen die ortsüblichen Gefahrenstellen wie Schulen, Fußgängerüberwege oder Engstellen durch ihre tägliche Befahrung der Strecken und speisen ihre vorsichtige Fahrweise in die Statistik ein. Dadurch lassen sich Warnungen vor Gefahrenstellen und empfohlene Geschwindigkeiten an nicht ortskundige Fahrer übergeben. Zusätzlich kann über eine HMI eine Warnung ausgegeben werden, wenn der Fahrer die empfohlene Geschwindigkeit signifikant überschreitet.

Als Gefahrenstellen gelten beispielsweise gefährliche Einmündungen, die wegen Gebäuden o. Ä. schlecht einsehbar sind. In diesen Bereichen wird eine Geschwindigkeit empfohlen, die geringer ist als es der Straßenverlauf ermöglichen würde. Neben der Position spielt auch der Zeitpunkt der Erfassung eine Rolle. Besonders in der Nähe von ÖPNV Stationen sind zu den Hauptzeiten des Berufsverkehrs mit einem erhöhten Fußgängeraufkommen zu rechnen. Dabei tendieren Fußgänger häufig dazu, kurze Wege zu wählen, die von Fußgängerüberwegen abweichen können. Hier wird zu entsprechenden Uhrzeiten ebenfalls eine verlangsamte Geschwindigkeit empfohlen.

Neben den regelmäßig auftretenden Gefahrenstellen könnten auch solche erfasst werden, die durch temporär auftretende Gefahren verursacht werden, wie z. B. Geisterfahrer.

Konkret wird daher ein Verfahren vorgeschlagen, das folgende Schritte umfasst und nicht Teil der Erfindung ist:
- Erfassen von Geschwindigkeiten eines Fahrzeuges 2 zu Absolutpositionen des Fahrzeugs, die mittels des GNSS 15 ermittelt wird, insbesondere wenn ein Ausgangssignal 20, 28, 34 aus einem Bewegungsaufnahmesensor 18, 26, 32 des Fahrzeugs 2 einen charakteristischen Verlauf 60 aufweist,
- Übermitteln der Geschwindigkeit und Absolutposition an einen externen Server,
- Vergleichen der Geschwindigkeiten mehrerer Fahrzeuge an den Absolutpositionen, insbesondere unter Berücksichtigung von Uhrzeit, Witterung, Jahreszeit, Straßenbedingung, usw., und
- Erkennen von auffälligen Geschwindigkeitsänderungen.

Das Verfahren kann dadurch weitergebildet werden, dass Daten von oder über fest installierte Straßeneinrichtungen berücksichtigt werden, wie z. B. Road Side Units zur Fahrzeug-zu-X Kommunikation, Zebrastreifen, ÖPNV Stationen, etc.

Die Fahrzeuge können die Daten auf diverse Art und Weise nutzen:
- Warnung an den Fahrer über Fahrbahnunebenheiten, visuell oder haptisch über ein Force Feedback Pedal,
- automatische Adaption der Sollgeschwindigkeit im Tempomat,
- bei Fahrzeugen mit aktivem Fahrwerk, kann das Fahrwerk entsprechend konditioniert werden,
- durch geschickte Kombination der exakten Fahrzeugposition und Reduktion des Bremsdrucks kann der erste Stoß beim Auffahren eines Fahrzeugs auf eine Bremsschwelle komfortabel gemindert werden,
- Plausibilisieren der Daten über die Bodenunebenheiten, die eine möglicherweise Kamera liefert.

Ein weiteres vorteilhaftes Ausführungsbeispiel, das nicht Teil der Erfindung ist und unabhängig oder in Kombination mit den vorigen Ausführungsbeispielen ausführbar ist, betrifft ein Verfahren zum Erstellen einer Karte über Kommunikationsmittel, aufweisend die Schritte:
- Erfassen der Absolutposition 76 des Fahrzeuges (2) mittels des GNSS 15, wenn ein Ausgangssignal aus einem Kommunikationsmodul des Fahrzeugs, wie z. B. Mobilfunkeinheit oder GNSS Einheit 2 einen charakteristischen Verlauf 60 aufweist, insbesondere einen Abnahme der Signalstärke,
- Bestimmen einer Referenzposition basierend auf der erfassten Absolutposition, und
- Zuordnen des charakteristischen Verlaufs des Ausgangssignals zu der Referenzposition, vorzugsweise samt der Signalstärke.

Das Verfahren kann dadurch vorteilhaft ergänzt werden, indem es mit einem Verfahren zum Bestimmen einer Referenzposition gemäß dem ersten Ausführungsbeispiel kombiniert wird, um die Genauigkeit der Position zu erhöhen. Ferner ist es vorteilhaft die Daten in einem Backend Server zu speichern und auszuwerten.

## Patentansprüche

1. Verfahren zum Bestimmen einer Referenzposition (61) als Grundlage für eine Korrektur (46) einer mittels eines GNSS genannten globalen Satellitennavigationssystems (15) georteten Absolutposition (76) eines Fahrzeuges (2), umfassend:
- Erfassen eines Ausgangssignals (20, 28, 34) eines Bewegungsaufnahmesensors (18, 26, 32) des Fahrzeugs (2),
- Erkennen, ob das Ausgangssignal (20, 28, 34) einen charakteristischen Verlauf (60) aufweist, der ein von Unebenheiten der Fahrbahn abhängiges Signalmuster darstellt,
- Erfassen der Absolutposition (76) des Fahrzeuges (2) mittels des GNSS (15), wenn das Ausgangssignal den charakteristischen Verlauf (60) aufweist,
- Speichern des charakteristischen Verlaufs des Ausgangssignals zusammen mit der Absolutposition (76) als Referenzposition (61), und
- Korrigieren einer bereits gespeicherten Referenzposition (61), an der der charakteristische Verlauf bereits erfasst wurde, basierend auf der Absolutposition (76) mittels eines Lernverfahrens oder einer Mittelwertbildung, falls die gespeicherte Referenzposition (61) in einem Bereich um die Absolutposition (76) liegt.

2. Verfahren nach Anspruch 1, wobei der charakteristische Verlauf (60) des Ausgangssignals (20, 28, 34) auf einer vorbestimmten Oberflächenstruktur (62, 68. 70, 72) einer Fahrbahn (13) basiert, auf dem das Fahrzeug (13) fährt.

3. Verfahren nach Anspruch 1 oder 2, wobei der Bewegungsaufnahmesensor (18, 26, 32) eine Position und/oder eine Geschwindigkeit und/oder eine Beschleunigung wenigstens eines Bauteils des Fahrzeuges (2) misst.

4. Verfahren nach einem der vorstehenden Ansprüche, umfassend:
- Korrigieren der Referenzposition (61) basierend auf einer erneut erfassten Absolutposition (76), wenn der charakteristische Verlauf (60) in dem Ausgangssignal (20, 28, 34) aus dem Bewegungssensor (18, 26, 32) erneut erkannt wird.

5. Verfahren nach einem der vorstehenden Ansprüche, umfassend:
- Erfassen einer weiteren Absolutposition (76) des Fahrzeuges (2), wenn das Ausgangssignal (20, 28, 34) aus dem Bewegungsaufnahmesensor (18, 26, 32) des Fahrzeuges (2) einen sich vom charakteristischen Verlauf (60) unterscheidenden weiteren charakteristischen Verlauf (60) aufweist.

6. Verfahren nach Anspruch 5, wobei ein Abstand zwischen dem charakteristischen Verlauf (60) und dem weiteren charakteristische Verlauf (60) eine vorbestimmte Bedingung erfüllt.

7. Verfahren nach einem der vorstehenden Ansprüche, umfassend:
- Löschen (84) der Referenzposition (61) basierend auf einer vorbestimmten Bedingung (82).

8. Verfahren nach Anspruch 7, wobei die vorbestimmte Bedingung (82) dann erfüllt ist, wenn ein Integritätsmaß (82) für die Zuordnung zwischen der Referenzposition (61) und dem charakteristischen Verlauf (60) des Ausgangssignals (20, 28, 34) einen Schwellwert unterschreitet.

9. Verfahren zum Aufzeichnen einer Karte (86), umfassend:
- ein Verfahren zum Bestimmen einer Referenzposition (61) nach einem der Ansprüche 1 bis 8, und
- Eintragen der bestimmten Referenzposition (61) als Kartenposition einer Straße (13) in die Karte.

10. Verfahren nach Anspruch 9, wobei der Bewegungsaufnahmesensor (18, 26, 32) als ein Beschleunigungssensor des Fahrzeugs oder als ein mobiles Endgerät mit einem Beschleunigungssensor ausgebildet ist.

11. Verfahren nach Anspruch 10, wobei der Verlauf der Beschleunigung des Beschleunigungssensors mit der Referenzposition verknüpft aufgezeichnet wird.

12. Verfahren nach einem der Ansprüche 10 bis 11, wobei ein Verlauf eines Längsbeschleunigungssensors zu Referenzpositionen aufgezeichnet wird.

13. Verfahren nach einem der Ansprüche 10 bis 12, ferner umfassend die Schritte:
- Auswerten des Beschleunigungsverlaufs, und
- Erkennen von Fahrbahnunebenheiten anhand von Beschleunigungsspitzen.

14. Verfahren nach Anspruch 13, ferner umfassend den Schritt:
- Erkennen von Fahrbahnunebenheiten anhand eines mittels einer Kamera aufgenommen Straßenbildes.

15. Verfahren nach einem der Ansprüche 13 und 14, ferner umfassend den Schritt:
- Erstellen einer lokal und / oder zentral verwalteten Karte für Fahrbahnunebenheiten.

16. Verfahren nach einem der Ansprüche 13 bis 15, wobei die Fahrbahnunebenheiten in Abhängigkeit von Beschleunigungsspitzen klassifiziert werden.

17. Verfahren nach einem der Ansprüche 10 bis 16, wobei der Verlauf der Beschleunigung mit weiteren Fahrsituations-, Fahrertyp- und / oder Fahrzeugparametern verknüpft wird.

18. Verfahren nach dem vorstehenden Anspruch, wobei mittels des Verlaufs der Beschleunigung und den jeweiligen Parametern Beschleunigungsverlaufscluster gebildet werden.

19. Verfahren nach einem der Ansprüche 10 bis 18, wobei aus dem Verlauf der Beschleunigung und / oder aus den Fahrbahnunebenheiten Sollgeschwindigkeiten oder Gefahrenstellen abgeleitet werden.

20. Steuervorrichtung (4) zum Bestimmen einer Referenzposition (61) als Grundlage für eine Korrektur (46) einer mittels eines GNSS genannten globalen Satellitennavigationssystems (15) georteten Absolutposition (76) eines Fahrzeuges (2), umfassend:
- Einen Bewegungsaufnahmesensor (18, 26, 32) des Fahrzeugs (2) zum Erfassen eines Ausgangssignals (20, 28, 34),
- Einen Prozessor, der eingerichtet ist zu erkennen, ob das Ausgangssignal (20, 28, 34) einen charakteristischen Verlauf (60) aufweist, der ein von Unebenheiten der Fahrbahn abhängiges Signalmuster darstellt,
- Einen GNSS-Empfänger zum Erfassen der Absolutposition (76) des Fahrzeuges (2), wenn das Ausgangssignal den charakteristischen Verlauf aufweist,
- Einen Speicher zum Speichern des charakteristischen Verlaufs des Ausgangssignals zusammen mit der Absolutposition (76) als Referenzposition (61), und
- wobei der Prozessor weiter eingerichtet ist eine bereits gespeicherte Referenzposition (61) basierend auf der Absolutposition (76) mittels eines Lernverfahrens oder einer Mittelwertbildung zu korrigieren, falls die Absolutposition (76) in einem Bereich um die gespeicherte Referenzposition (61) liegt, wobei die Steuervorrichtung konfiguriert ist, ein Verfahren nach zumindest einem der Ansprüche 1 bis 19 durchzuführen.

## Claims

1. Method for determining a reference position (61) as a basis for correcting (46) an absolute position (76) of a vehicle (2), as located by means of a global navigation satellite system (15) called GNSS, comprising:
- capturing an output signal (20, 28, 34) from a motion recording sensor (18, 26, 32) of the vehicle (2),
- identifying whether the output signal (20, 28, 34) has a characteristic profile (60) representing a signal pattern dependent on unevennesses of the road,
- capturing the absolute position (76) of the vehicle (2) by means of the GNSS (15) if the output signal has the characteristic profile (60),
- storing the characteristic profile of the output signal together with the absolute position (76) as a reference position (61), and
- correcting an already stored reference position (61), at which the characteristic profile has already been captured, on the basis of the absolute position (76) by means of a learning method or by forming a mean value if the stored reference position (61) is in a region around the absolute position (76).

2. Method according to Claim 1, wherein the characteristic profile (60) of the output signal (20, 28, 34) is based on a predetermined surface structure (62, 68, 70, 72) of a road (13) on which the vehicle (13) is driving.

3. Method according to Claim 1 or 2, wherein the motion recording sensor (18, 26, 32) measures a position and/or a speed and/or an acceleration of at least one component of the vehicle (2).

4. Method according to one of the preceding claims, comprising:
- correcting the reference position (61) on the basis of an absolute position (76) which has been captured again if the characteristic profile (60) is identified again in the output signal (20, 28, 34) from the motion sensor (18, 26, 32).

5. Method according to one of the preceding claims, comprising:
- capturing a further absolute position (76) of the vehicle (2) if the output signal (20, 28, 34) from the motion recording sensor (18, 26, 32) of the vehicle (2) has a further characteristic profile (60) that differs from the characteristic profile (60).

6. Method according to Claim 5, wherein a distance between the characteristic profile (60) and the further characteristic profile (60) satisfies a predetermined condition.

7. Method according to one of the preceding claims, comprising:
- deleting (84) the reference position (61) on the basis of a predetermined condition (82).

8. Method according to Claim 7, wherein the predetermined condition (82) is satisfied when an integrity measure (82) for the assignment between the reference position (61) and the characteristic profile (60) of the output signal (20, 28, 34) falls below a threshold value.

9. Method for recording a map (86), comprising:
- a method for determining a reference position (61) according to one of Claims 1 to 8, and
- entering the determined reference position (61) as a map position of a road (13) in the map.

10. Method according to Claim 9, wherein the motion recording sensor (18, 26, 32) is in the form of an acceleration sensor of the vehicle or in the form of a mobile terminal having an acceleration sensor.

11. Method according to Claim 10, wherein the acceleration profile of the acceleration sensor is recorded in a manner linked to the reference position.

12. Method according to one of Claims 10 to 11, wherein a profile of a longitudinal acceleration sensor with respect to reference positions is recorded.

13. Method according to one of Claims 10 to 12, also comprising the steps of:
- evaluating the acceleration profile, and
- identifying road unevennesses on the basis of acceleration peaks.

14. Method according to Claim 13, also comprising the step of:
- identifying road unevennesses on the basis of a road image recorded by means of a camera.

15. Method according to either of Claims 13 and 14, also comprising the step of:
- creating a locally and/or centrally managed map for road unevennesses.

16. Method according to one of Claims 13 to 15, wherein the road unevennesses are classified on the basis of acceleration peaks.

17. Method according to one of Claims 10 to 16, wherein the acceleration profile is linked to further driving situation, driver type and/or vehicle parameters.

18. Method according to the preceding claim, wherein acceleration profile clusters are formed by means of the acceleration profile and the respective parameters.

19. Method according to one of Claims 10 to 18, wherein target speeds or dangerous locations are derived from the acceleration profile and/or from the road unevennesses.

20. Control apparatus (4) for determining a reference position (61) as a basis for correcting (46) an absolute position (76) of a vehicle (2), as located by means of a global navigation satellite system (15) called GNSS, comprising:
- a motion recording sensor (18, 26, 32) of the vehicle (2) for capturing an output signal (20, 28, 34),
- a processor which is configured to identify whether the output signal (20, 28, 34) has a characteristic profile (60) representing a signal pattern dependent on unevennesses of the road,
- a GNSS receiver for capturing the absolute position (76) of the vehicle (2) if the output signal has the characteristic profile,
- a memory for storing the characteristic profile of the output signal together with the absolute position (76) as a reference position (61), and
- wherein the processor is also configured to correct an already stored reference position (61) on the basis of the absolute position (76) by means of a learning method or by forming a mean value if the absolute position (76) is in a region around the stored reference position (61), wherein the control apparatus is configured to carry out a method according to at least one of Claims 1 to 19.

## Revendications

1. Procédé permettant de déterminer une position de référence (61) pour servir de base à une correction (46) d'une position absolue (76) d'un véhicule (2), localisée au moyen d'un système mondial de navigation par satellite (15) appelé GNSS, comprenant les étapes consistant à :
- détecter un signal de sortie (20, 28, 34) d'un capteur d'acquisition de mouvement (18, 26, 32) du véhicule (2),
- reconnaître si le signal de sortie (20, 28, 34) présente un tracé caractéristique (60) qui représente un modèle de signal dépendant des irrégularités de la chaussée,
- détecter la position absolue (76) du véhicule (2) au moyen du GNSS (15), si le signal de sortie présente le tracé caractéristique (60),
- stocker le tracé caractéristique du signal de sortie avec la position absolue (76) comme une position de référence (61), et
- corriger une position de référence (61) déjà stockée, à laquelle le tracé caractéristique a déjà été détecté, sur la base de la position absolue (76) au moyen d'un procédé d'apprentissage ou d'un établissement de la moyenne si la position de référence stockée (61) est située dans une zone autour de la position absolue (76).

2. Procédé selon la revendication 1, dans lequel le tracé caractéristique (60) du signal de sortie (20, 28, 34) est basé sur une structure de surface prédéterminée (62, 68. 70, 72) d'une chaussée (13) sur laquelle se déplace le véhicule (13).

3. Procédé selon la revendication 1 ou 2, dans lequel le capteur d'acquisition de mouvement (18, 26, 32) mesure une position et/ou une vitesse et/ou une accélération d'au moins un composant du véhicule (2).

4. Procédé selon l'une quelconque des revendications précédentes, comprenant l'étape consistant à :
- corriger la position de référence (61) sur la base d'une position absolue (76) détectée à nouveau si le tracé caractéristique (60) est à nouveau reconnu dans le signal de sortie (20, 28, 34) provenant du capteur de mouvement (18, 26, 32).

5. Procédé selon l'une quelconque des revendications précédentes, comprenant l'étape consistant à :
- détecter une autre position absolue (76) du véhicule (2) si le signal de sortie (20, 28, 34) provenant du capteur d'acquisition de mouvement (18, 26, 32) du véhicule (2) présente un autre tracé caractéristique (60) différent du tracé caractéristique (60).

6. Procédé selon la revendication 5, dans lequel une distance entre le tracé caractéristique (60) et l'autre tracé caractéristique (60) remplit une condition prédéterminée.

7. Procédé selon l'une quelconque des revendications précédentes, comprenant l'étape consistant à :
- supprimer (84) la position de référence (61) sur la base d'une condition prédéterminée (82).

8. Procédé selon la revendication 7, dans lequel la condition prédéterminée (82) est remplie si une mesure d'intégrité (82) de l'affectation entre la position de référence (61) et le tracé caractéristique (60) du signal de sortie (20, 28, 34) est inférieure à une valeur seuil.

9. Procédé permettant d'enregistrer une carte (86), comprenant :
- un procédé permettant de déterminer une position de référence (61) selon l'une quelconque des revendications 1 à 8, et
- l'inscription de la position de référence (61) déterminée comme une position cartographique d'une rue (13) sur la carte.

10. Procédé selon la revendication 9, dans lequel le capteur d'acquisition de mouvement (18, 26, 32) est réalisé sous la forme d'un capteur d'accélération du véhicule ou d'un terminal mobile équipé d'un capteur d'accélération.

11. Procédé selon la revendication 10, dans lequel le tracé de l'accélération du capteur d'accélération est enregistré en association avec la position de référence.

12. Procédé selon l'une quelconque des revendications 10 à 11, dans lequel un tracé d'un capteur d'accélération longitudinale est enregistré pour des positions de référence.

13. Procédé selon l'une quelconque des revendications 10 à 12, comprenant en outre les étapes consistant à :
- évaluer le tracé d'accélération, et
- reconnaître des irrégularités de la chaussée à l'aide de pointes d'accélération.

14. Procédé selon la revendication 13, comprenant en outre l'étape consistant à :
- reconnaître des irrégularités de la chaussée à l'aide d'une image de rue enregistrée au moyen d'une caméra.

15. Procédé selon l'une quelconque des revendications 13 et 14, comprenant en outre l'étape consistant à :
- dresser une carte gérée de manière locale et/ou centrale pour des irrégularités de la chaussée.

16. Procédé selon l'une quelconque des revendications 13 à 15, dans lequel les irrégularités de la chaussée sont classifiées en fonction de pointes d'accélération.

17. Procédé selon l'une quelconque des revendications 10 à 16, dans lequel le tracé de l'accélération est associé à d'autres paramètres de situation de conduite, de type de conducteur et/ou de véhicule.

18. Procédé selon la revendication précédente, dans lequel des grappes de tracés d'accélération sont formées au moyen du tracé de l'accélération et des paramètres respectifs.

19. Procédé selon l'une quelconque des revendications 10 à 18, dans lequel des vitesses de consigne ou des endroits dangereux sont déduits à partir du tracé de l'accélération et/ou des irrégularités de la chaussée.

20. Dispositif de commande (4) permettant de déterminer une position de référence (61) servant de base à une correction (46) d'une position absolue (76) d'un véhicule (2), localisée au moyen d'un système mondial de navigation par satellite (15) appelé GNSS, comprenant :
- un capteur d'acquisition de mouvement (18, 26, 32) du véhicule (2) servant à détecter un signal de sortie (20, 28, 34),
- un processeur qui est conçu pour reconnaître si le signal de sortie (20, 28, 34) présente un tracé caractéristique (60) qui représente un modèle de signal dépendant des irrégularités de la chaussée,
- un récepteur GNSS servant à détecter la position absolue (76) du véhicule (2) si le signal de sortie présente le tracé caractéristique,
- une mémoire servant à stocker le tracé caractéristique du signal de sortie avec la position absolue (76) comme une position de référence (61), et
- dans lequel le processeur est en outre conçu pour corriger une position de référence (61) déjà mémorisée sur la base de la position absolue (76) au moyen d'un procédé d'apprentissage ou d'un établissement de la moyenne si la position absolue (76) est située dans une zone autour de la position de référence (61) mémorisée, le dispositif de commande étant configuré pour exécuter un procédé selon au moins l'une des revendications 1 à 19.
